# EUROPEAN PATENT APPLICATION

(11) **EP 3 064 073 A1**
(43) Date of publication of application: **07.09.2016**
(21) Application number: 14858483.2
(22) Date of filing: 29.10.2014
(51) Int. Cl.: A23N 1/02, A47J 19/04, A47J 43/25

(54) **STRAINER DEVICE**

(30) Priority: 31.10.2013 JP 2013227753
(71) Applicant: Nepuree Corporation, Chuo-ku Tokyo Tokyo 103-0023 (JP)
(72) Inventor: KANO Tsutomu, Tokyo 104-0031 (JP); TANIWAKI Ken, Tokyo 104-0031 (JP); YAMASHITA Masateru, Tokyo 104-0031 (JP)
(74) Representative: Kilian Kilian & Partner
(86) International application number: PCT/JP2014/078792
(87) International publication number: WO 2015/064649

(57) **Abstract**

To provide a strainer device that can collect a filtered object without problems even if the strainer device is used with an object to be strained that is low in water content and is highly adhesive, such as sweet potato softened by heating in superheated steam. The strainer device includes: a cover body (26) that is in a vertical orientation, has an inner surface that is circular in cross section, surrounds a strainer vessel (3) at an appropriate distance and is supported so as to be rotatable about a central axis thereof; a scraping member (22) that is disposed at a predetermined position along the inner surface of the cover body and scrapes a filtered object adhering to the inner surface when the cover body is rotating; and a rotationally driving mechanism that makes the strainer vessel and the cover body rotate, and, when the strainer vessel is rotating, the filtered object pushed out of the filtering hole (3d) and adhering to the inner surface of the cylindrical cover body is scraped off to the predetermined position on a circumference along the inner surface.

## Description

### Technical Field

The present invention relates to a strainer device suitable for a straining process for a food ingredient softened by heating in superheated steam or the like, and a method of manufacturing a puree food product using the strainer device.

### Background Art

The applicant has found that, if a food ingredient (such as a fruit, a vegetable or a grain) is softened by heating in superheated steam without or with low concentration of oxygen and then strained through a strainer, a liquid or puree food product retaining the functionality of the food ingredient or having an additional functionality can be produced (see Patent Literature 1).

A strainer device has a strainer vessel (a rotary teeth cylinder 7) that is open at the top and has a circumferential plate with a large number of filtering holes (rows of small holes 7b). The object to be strained is put into the vessel through the open top thereof, and the vessel is rotated at high velocity with the open top facing upward. Then, the object to be strained is pressed against the inner surface of the circumferential plate by the action of the centrifugal force and is forced through the filtering holes. The strainer device that strains an object to be strained in this way has a simple structure and is easy to control and therefore is used for crushing or straining of various food ingredients (see Patent Literature 2, for example).

### Citation List

### Patent Literature

Patent Literature 1 Japanese Patent Laid-Open No. 2009-178168
Patent Literature 2 Japanese Patent Laid-Open No. 2010-022714

### Summary of Invention

### Technical Problem

With the conventional strainer device, such as that described in Patent Literature 2, the filtered object (processed object 21) having passed through the filtering holes (rows of small holes 7b) of the strainer vessel (rotary teeth cylinder 7) is radially scattered, collides with the cylindrical inner wall of the case 3 surrounding the strainer vessel (rotary teeth cylinder 7), flows downward along the inner wall under its own weight and is eventually collected in the supply chute 6. If the strainer device is used with an object to be strained that is low in water content and is highly adhesive, such as sweet potato softened by heating in superheated steam, the filtered object (processed object 21) scattered from the filtering holes (rows of small holes 7b) adheres to the cylindrical inner wall of the case 3 and may be unable to be collected.

On the other hand, if the strainer of such a structure is used with an object to be strained that is high in water content and is highly fluid, such as strawberry softened by heating in superheated steam, the filtered object (processed object 21) scattered from the filtering holes (rows of small holes 7b) flies in the air for a certain distance and then collides with the cylindrical inner wall, and the filtered object is likely to take in fine air bubbles when the object is flying in the air or collides with the inner wall. The resulting filtered object (processed object 21) has a bad whitish appearance because of the fine air bubbles.

The present invention has been devised in view of the technical background described above, and an object of the present invention is to provide a strainer device of the type described above that uses a centrifugal force generated by rotation of a bottomed cylindrical strainer vessel having a circumferential surface with a filtering hole and can collect a filtered object without problems even if the strainer device is used with an object that is low in water content and is highly adhesive, such as sweet potato softened by heating in superheated steam.

Another object of the present invention is to provide a strainer device of the type described above that uses a centrifugal force generated by rotation of a bottomed cylindrical strainer vessel having a circumferential surface with a filtering hole and can produce a filtered object that is sufficiently degassed and vividly shows the color of the food ingredient itself even if the strainer device is used with an object that is high in water content and is highly fluid, such as strawberry softened by heating in superheated steam.

Further objects, effects and advantages of the present invention will be easily understood by those skilled in the art by reading the description hereinafter with reference to the accompanying drawings.

### Solution to Problem

The technical problems described above can be solved by providing a strainer device configured described below and a method of manufacturing a puree food product by using the strainer device.

### <Configuration of Device according to Invention>

Specifically, a strainer device according to the present invention is a strainer device that has at least a vertical bottomed cylindrical strainer vessel, which is supported so as to be rotatable about a central axis thereof and has a circumferential plate with a filtering hole, and crushes a food ingredient softened by heating put into the strainer vessel by passing the food ingredient through the filtering hole by the action of a centrifugal force generated by rotation of the strainer vessel, the strainer device comprising: a cover body that is in a vertical orientation, has an inner surface that is circular in cross section, surrounds the strainer vessel at an appropriate distance and is supported so as to be rotatable about a central axis thereof; a scraping member that is disposed at a predetermined position along the inner surface of the cover body and scrapes a filtered object adhering to the inner surface when the cover body is rotating; and a rotationally driving mechanism that makes the strainer vessel and the cover body rotate, wherein, when the strainer vessel is rotating, the filtered object pushed out of the filtering hole and adhering to the inner surface of the cylindrical cover body is scraped off to the predetermined position on a circumference along the inner surface.

### <Effect of Device according to Invention>

With such a configuration, even if the strainer device of this type that uses the centrifugal force generated by rotation of the bottomed cylindrical strainer vessel having the filtering hole in the circumferential surface is used with an object to be strained that is low in water content and is highly adhesive, such as sweet potato softened by heating in superheated steam, the filtered object that is scattered from the filtering hole and adheres to the inner surface of the cover body when the strainer vessel is rotating is scraped off by the scraping member to the predetermined position on the circumference along the inner surface and thus can be collected without problems.

### <Configuration of Device according to First Implementation of Invention>

The scraping member may be capable of being switched between a scraping-active state and a scraping-inactive state.

### <Effect of Device according to First Implementation of Invention>

With such a configuration, whether to use the scraping member or not can be determined depending on the physical properties of the filtered object: for example, if the filtered object is highly fluid, the scraping member is set in the inactive state to let the filtered object to drop or flow by gravity, and if the filtered object is highly adhesive, the scraping member is set in the active state to actively scrape the filtered object adhering to the inner surface of the cover body.

### <Configuration of Device according to Second Implementation of Invention>

An inlet of a collection vessel for the filtered object or a receiving port opening into a collection vessel for the filtered object is provided at the predetermined position along the inner surface to which the filtered object is scraped off.

### <Effect of Device according to Second Implementation of Invention>

With such a configuration, even if the strainer device is used in a method of manufacturing a filtered object (puree food product) that is highly adhesive, most of the filtered object, which is the finished product, is collected in the collection vessel on its own. Thus, the effort and time required for collecting the filtered object can be substantially reduced, and the workability can be improved.

### <Configuration of First Manufacturing Method according to Invention>

According to another aspect, the present invention can be regarded as a first method of manufacturing a puree food product by using the device according to the present invention. The first manufacturing method is a method of manufacturing a puree food product by performing a straining process on a food ingredient including a vegetable, a fruit and/or a grain softened by heating in a superheated steam atmosphere in a strainer device according to any one of claims 1 to 3.

### <Effect of First Manufacturing Method according to Invention>

With such a configuration, even if the softened food ingredient is a food ingredient that is low in water content and is highly adhesive, such as sweet potato softened by heating in superheated steam, the effort and time required for collection can be reduced, and the food ingredient can be efficiently processed into a puree food product.

### <Configuration of Second Manufacturing Method according to Invention>

According to another aspect, the present invention can be regarded as a second method of manufacturing a puree food product by using the device according to the present invention. The second manufacturing method comprises: a step of putting a softened food ingredient that is high in water content and is softened by heating in a superheated steam atmosphere into a vertical bottomed cylindrical strainer vessel that is supported so as to be rotatable about a central axis and has a circumferential plate with a filtering hole, and obtaining a filtered object by passing the softened food ingredient through the filtering hole by the action of at least a centrifugal force generated by rotation of the strainer vessel; a step of making a cover body, which is in a vertical orientation, has an inner surface that is circular in cross section, surrounds the strainer vessel at an appropriate distance and is supported so as to be rotatable about a central axis thereof, rotate at a number of rotations that is high enough to press the filtered object pushed out of the filtering hole of the circumferential plate of the strainer vessel against an inner surface of the cover body by the action of a centrifugal force, thereby allowing the filtered object to adhere to the inner surface of the cover body, to flow downward along the inner surface over a time and to be degassed during the time to remove a fine air bubble in the filtered object by the action of the pressure on the filtered object against the inner surface; and a step of scraping the degassed filtered object adhering to the inner surface of the cover body to a site with a scraping member in a final phase of the flow down.

### <Effect of Second Manufacturing Method according to Invention>

With such a configuration, even if the softened food ingredient is a food ingredient that is high in water content and is likely to take in fine air bubbles, such as strawberry softened by heating in superheated steam, the food ingredient can be sufficiently degassed by the action of the pressing force caused by the centrifugal force, and a puree food product that vividly shows the color of the food ingredient itself can be obtained.

### Advantageous Effects of Invention

According to the present invention, even if the strainer device of this type that uses the centrifugal force generated by rotation of the bottomed cylindrical strainer vessel having the filtering hole in the circumferential surface is used with an object to be strained that is low in water content and is highly adhesive, such as sweet potato softened by heating in superheated steam, the filtered object that is scattered from the filtering hole and adheres to the inner surface of the cover body when the strainer vessel is rotating is scraped off by the scraping member to the predetermined position on the circumference along the inner surface and thus can be collected without problems.

With the first manufacturing method, even if the softened food ingredient is a food ingredient that is low in water content and is highly adhesive, such as sweet potato softened by heating in superheated steam, the effort and time required for collection can be reduced, and the food ingredient can be efficiently processed into a puree food product.

With the second manufacturing method, even if the softened food ingredient is a food ingredient that is high in water content and is likely to take in fine air bubbles, such as strawberry softened by heating in superheated steam, the food ingredient can be sufficiently degassed by the action of the pressing force caused by the centrifugal force, and a puree food product that vividly shows the color of the food ingredient itself can be obtained.

### Brief Description of the Drawings

[Figure 1] Figure 1 is a side view showing an appearance of an entire strainer device (in which an elevator unit is in a raised position).
[Figure 2] Figure 2 is a side view showing an appearance of the entire strainer device (in which the elevator unit is in a lowered position).
[Figure 3] Figure 3 is an enlarged perspective view showing a supply part, a processing part and a collection part of the strainer device (in which the elevator unit is in the lowered position).
[Figure 4] Figure 4 is a partially cut-away enlarged cross-sectional view showing rotary pressers in the processing part (in which the rotary pressers are in a retracted position).
[Figure 5] Figure 5 is a partially cut-away enlarged cross-sectional view showing the rotary pressers in the processing part (in which the rotary pressers are in a protruding position).
[Figure 6] Figure 6 is an enlarged perspective view of the rotary pressers of the strainer device viewed obliquely from above.
[Figure 7] Figure 7 is an enlarged perspective view of the rotary pressers of the strainer device viewed obliquely from below.
[Figure 8] Figure 8 is a block diagram showing an electrical system configuration of the strainer device.
[Figure 9] Figure 9 is a diagram for illustrating how a filtered object is radially scattered from filtering holes of a circumferential plate of a strainer vessel and adheres to an inner surface of a cover body.
[Figure 10] Figure 10 is a conceptual diagram showing how the filtered object adhering to the inner surface of the cover body is scraped off by a scraping member.
[Figure 11] Figure 11 is a conceptual diagram showing a configuration of a driving mechanism for a cover body of a strainer device according to another embodiment.
[Figure 12] Figure 12 is a block diagram showing an electrical system configuration of the strainer device according to the other embodiment.

### Description of Embodiments

In the following, a preferred embodiment of a strainer device and a method of manufacturing a puree food product using the strainer device according to the present invention will be described in detail with reference to the accompanying drawings.

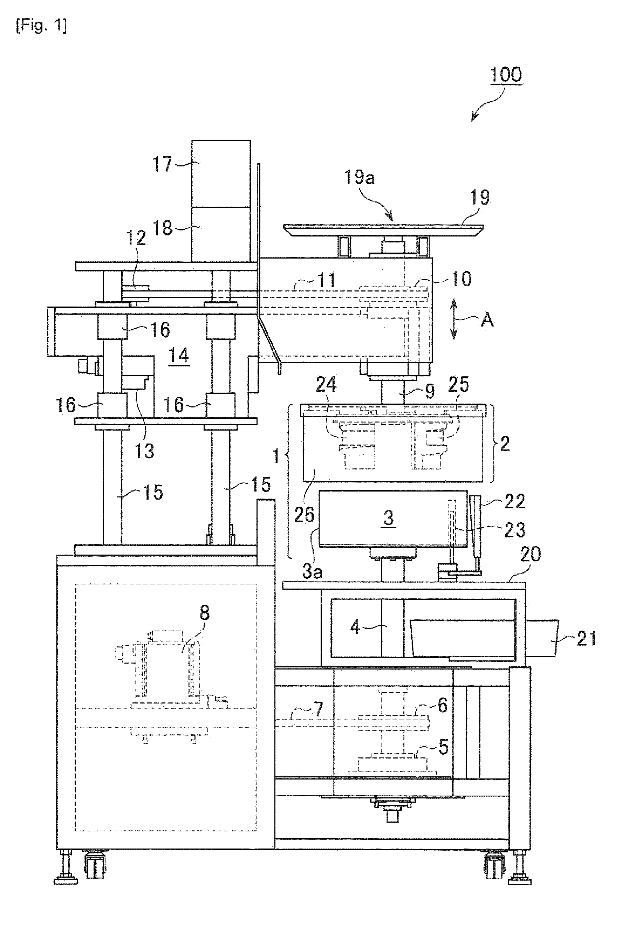

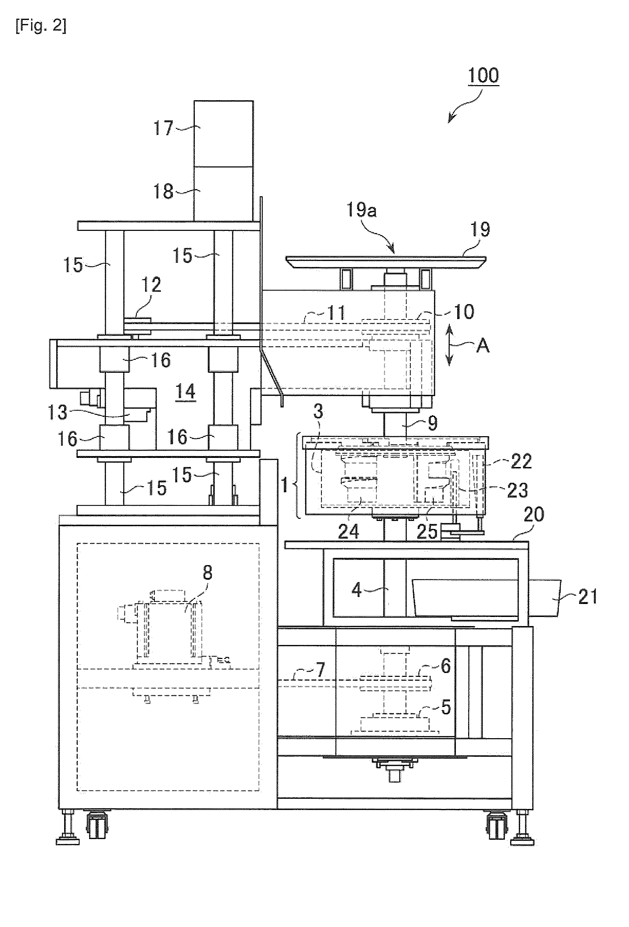

As shown in Figures 1 and 2, a strainer device 100 includes a processing part 1 used for a straining process. The processing part 1 includes an elevator unit 2 capable of ascending and descending within a predetermined stroke range and a strainer vessel 3 that contains an object to be strained. The object to be strained may be a vegetable (such as pumpkin, soybean, chickpea, carrot, cabbage, spinach, garland chrysanthemum or garlic), a fruit (such as mango, melon, strawberry, raspberry or banana) or a grain (such as rice, wheat, sweet potato or potato) softened by heating in a superheated steam atmosphere, for example.

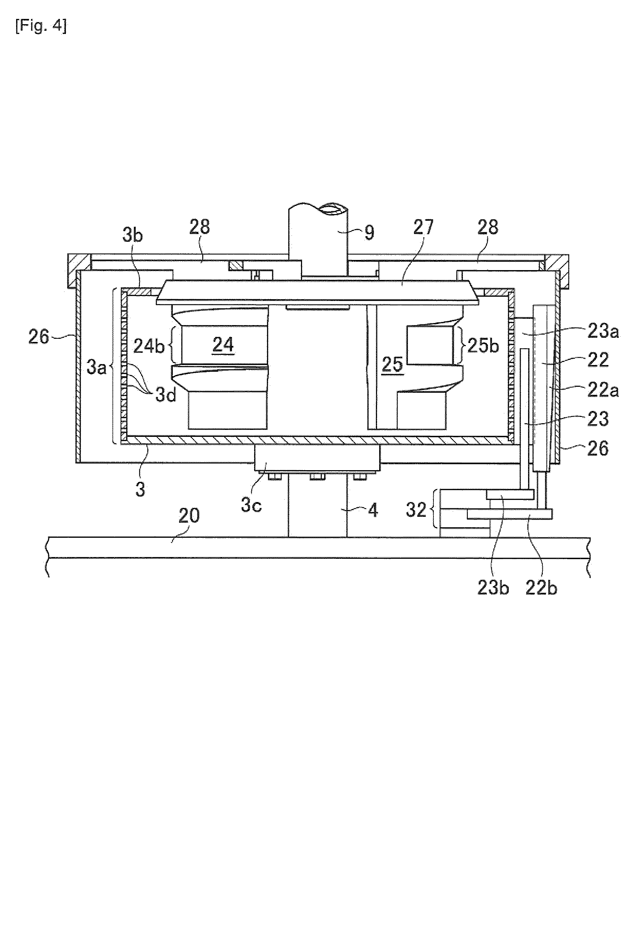

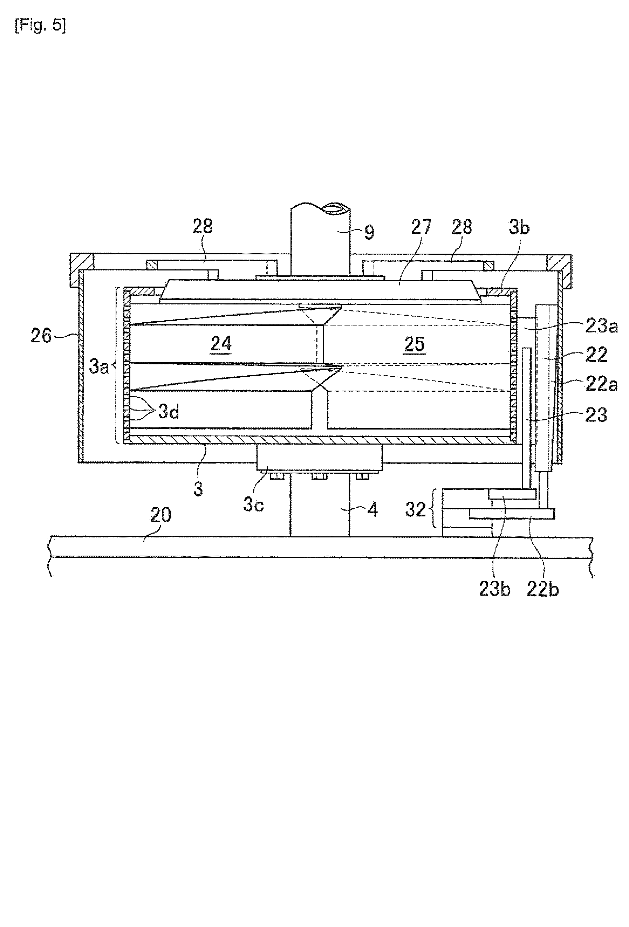

In the example shown, the strainer vessel 3 is a bottomed cylinder that is relatively shallow (the ratio of the diameter to the depth is approximately 3 to 1) and is open at the top and is placed in a vertical position. A large number of filtering holes 3d are formed in a circumferential plate 3a of the strainer vessel 3 (see Figures 4 and 5). The strainer vessel 3 is made of a material suitable for cleaning, such as aluminum or stainless steel, from the viewpoint of food sanitation. The diameter, the density or the distribution of the filtering holes 3d on the circumferential plate 3a can be appropriately chosen depending on the properties of the object to be strained. The filtering holes can be formed in any appropriate manner. For example, a previously punched stainless steel plate may be used, or an aluminum die-cast product having a bottomed cylindrical shape may be perforated.

The strainer vessel 3 is firmly fixed to an upper end part of a lower shaft 4, which vertically protrudes upward, via a bracket 3c with the open top thereof facing upward. The lower shaft 4 is supported in a vertical position on a pedestal for the entire strainer device via a thrust bearing 5 so as to be able to rotate in both directions (clockwise and counte-rclockwise). A servomotor 8 is disposed on the pedestal to a side of the lower shaft 4, and the lower shaft 4 can be driven to rotate at a specified velocity in both directions by the servomotor 8 via a driving pulley (not shown), a timing belt 7 and then a driven pulley 6.

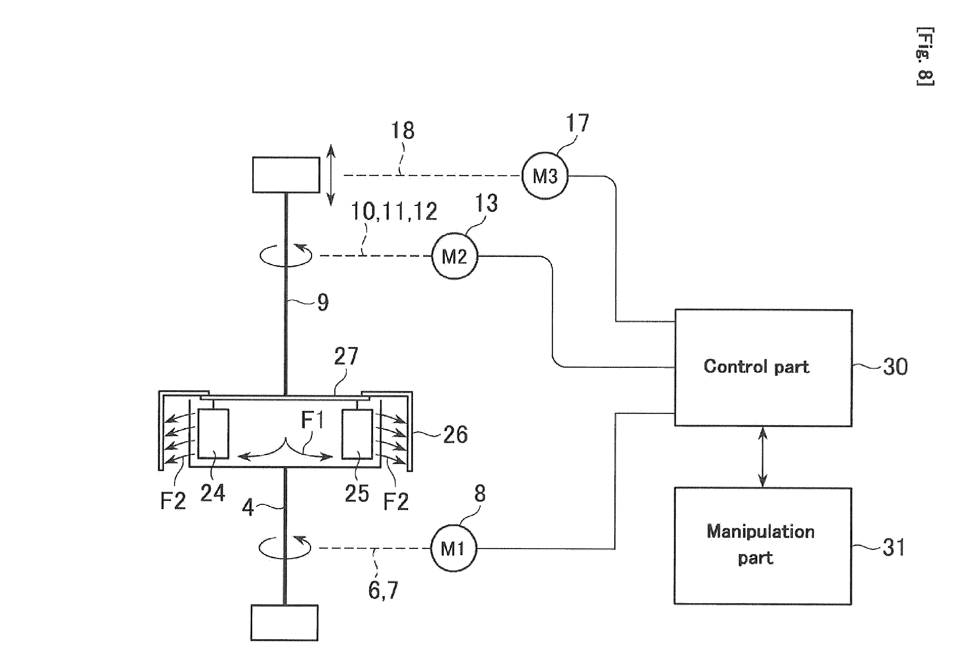

As described later, the elevator unit 2 includes two rotary pressers 24 and 25 and a cylindrical cover body 26 integrated with each other. The elevator unit 2 is fixed to a lower end part of an upper shaft 9, which protrudes vertically downward from an elevator platform 14. The upper shaft 9 is a hollow tube member and serves also as an input tube used for putting an object F1 to be strained (see Figure 8) into the strainer vessel 3. The upper shaft 9 is supported via a thrust bearing (not shown) incorporated in the elevator platform 14 so as to be able to rotate in both directions (clockwise and counterclockwise) in a vertical position. The elevator platform 14 is supported by a sliding mechanism, which includes a guide rod 15 and a guide sleeve 16, so as to be able to ascend and descend in a horizontal position. The elevator platform 14 can be made to ascend and descend by an elevator driving mechanism, which includes a ball screw mechanism 17 and a servomotor 18, as shown by the arrow A in the drawings.

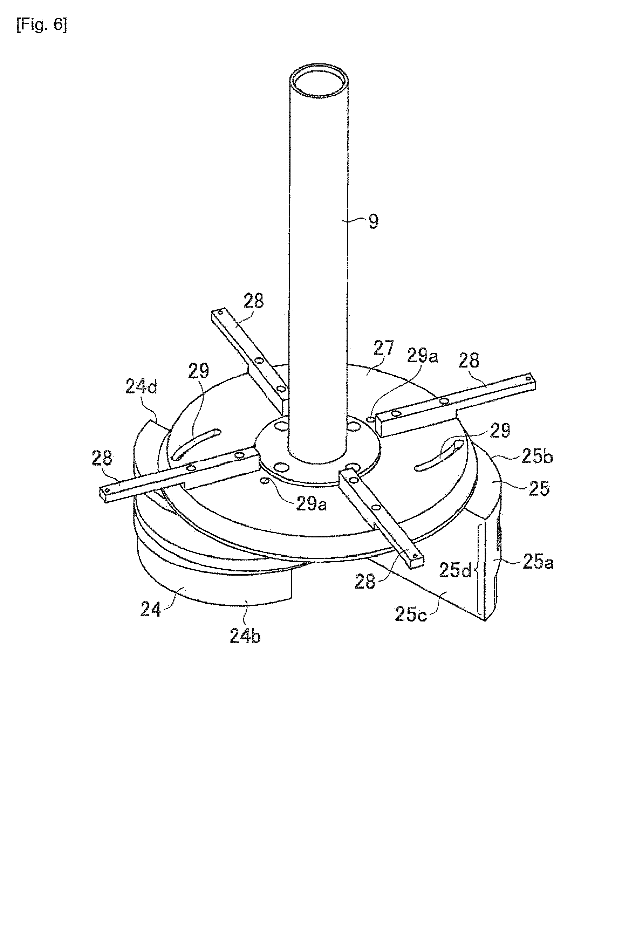

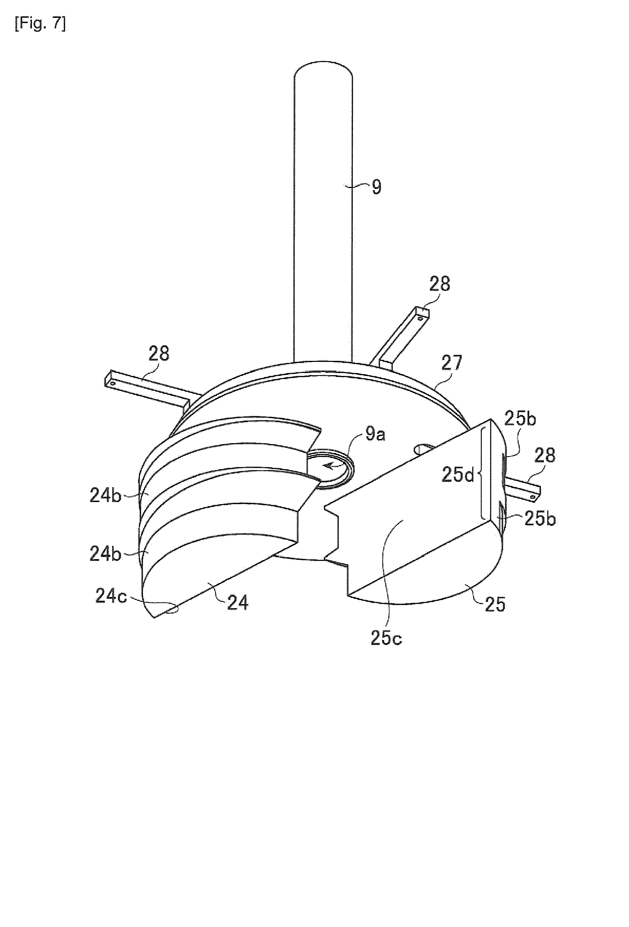

As shown in Figures 6 and 7, a disc-shaped lid plate 27 is fixed in a horizontal position to the lower end part of the upper shaft 9. The disc-shaped lid plate 27 covers the open top of the strainer vessel 3 and prevents the object F1 to be strained in the strainer vessel 3 from flying out of the strainer vessel 3 during operation. The two rotary pressers 24 and 25 are fixed in a horizontal position to a lower surface of the lid plate 27 at intervals of 180 degrees. The pressers 24 and 25 have the shape of a substantially semicircular column, which is formed by eccentrically dividing a solid cylindrical body along a plane parallel to the axis thereof, and have flat surfaces 24c and 25c and curved surfaces 24a and 25a having an arc-shaped cross section. The rotary pressers 24 and 25 are attached to the lower surface of the lid plate 27 by a bolt 29a and has a pin (not shown) that is inserted in an arc-shaped guide slot 29 in the lid plate. The pin allows the rotary presser to rotate within a predetermined angle range to protrude and retract from an outer periphery of the disc-shaped lid plate 27. A reason why the rotary pressers 24 and 25 are allowed to rotate to protrude and retract is that, if the presser 24 or 25 is in a protruding position when the elevator unit 2 descends, the presser interferes with an inward flange 3b (see Figure 4) for preventing flying out of the object, which protrudes from the periphery of the inlet opening of the vessel toward the center of the vessel. That is, the pressers 24 and 25 are placed in a retracted position (see Figure 4) to pass through the inlet opening when the elevator unit 2 descends and enters the vessel 3. Once the elevator unit 2 has entered the vessel 3, the pressers 24 and 25 are placed in the protruding position (see Figure 5), and straight edges 24c and 25c of the pressers 24 and 25 are disposed close to or abut against the inner surface of the circumferential plate 3a of the vessel 3, and the curved guide surface 24a and 25a having an arc-shaped cross section extend in such a manner as to gradually separate from the inner surface of the circumferential plate 3a.

As shown in Figures 4 to 7, the curved guide surfaces 24a and 25a having an arc-shaped cross section of the rotary pressers 24 and 25 each have two spiral guide grooves 24b and 25b. In a state where the vessel 3 is filled with the object to be strained to some extent, if the pressers 24 and 25 rotate clockwise when viewed from above at a lower velocity than the vessel 3, the guide groove 24b, 25b gradually guides the object to be strained in the vessel 3 into the tapered gap between the curved guide surface 24a, 25a of the presser 24, 25 and the inner surface of the circumferential plate 3a of the vessel, and the object to be strained is pressed under an appropriate pressure against the inner surface of the circumferential plate 3a, which serves as a filtering surface, by the straight edge 24d, 25d.

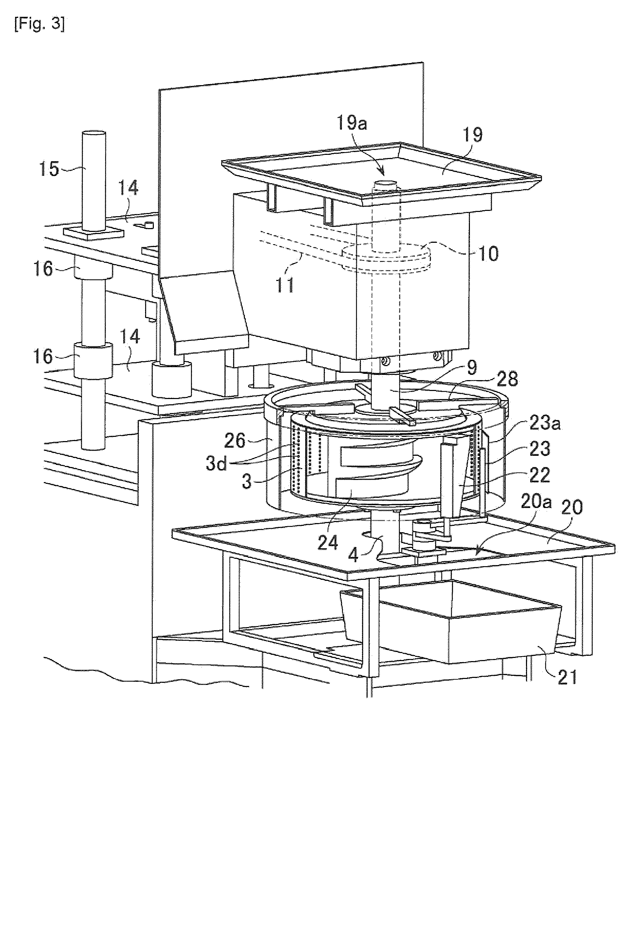

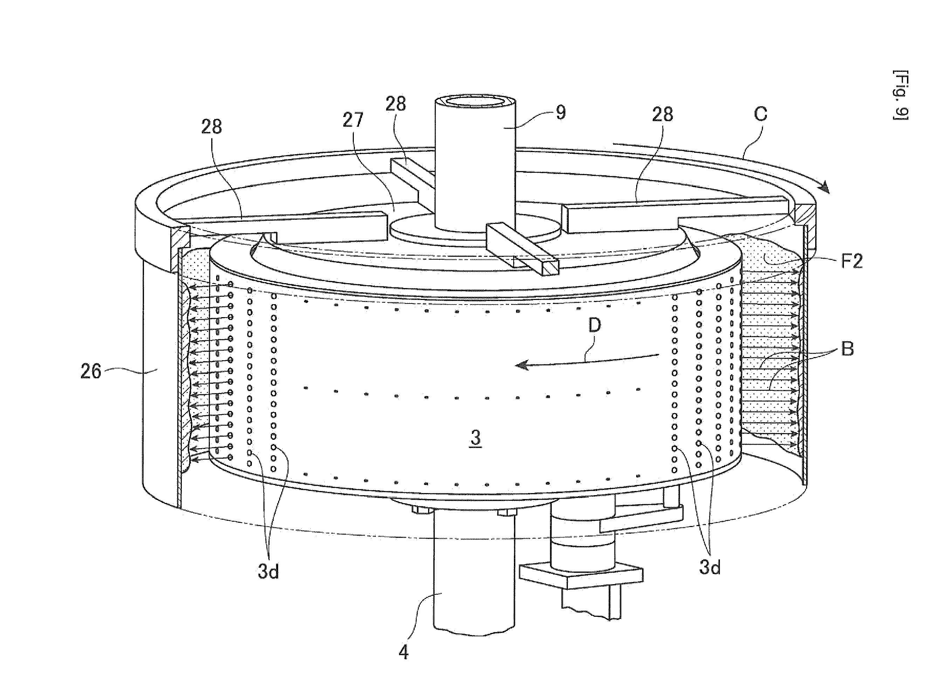

Next, a configuration of the cover body 26, which is an essential part of the present invention, will be described in detail. As shown in Figures 3 to 5, the cylindrical cover body 26 is disposed on the outer side of the strainer vessel 3 so as to surround the strainer vessel 3. As shown in Figure 9, the cover body 26 functions as a collecting member that receives a filtered object F2 (see Figure 8) radially scattered from the filtering holes 3d in the circumferential plate 3a of the strainer vessel 3 as shown by the arrow B and guides the filtered object F2 downward for collection if the filtered object F2 is highly fluid. If the filtered object F2 is highly adhesive, as shown in Figure 9, the filtered object F2 adheres to the inner surface of the cover body 26. In such a case, a scraping member 22 on the inner surface described later is activated to scrape the filtered object F2 off the inner surface of the cover body 26. In this example, the cover body 26 is coupled at an upper part thereof to the lid plate 27 via radial coupling bars 28. Thus, the cover body 26 rotates integrally with the rotary pressers 24 and 25 at a certain distance on the outer side of the strainer vessel 3.

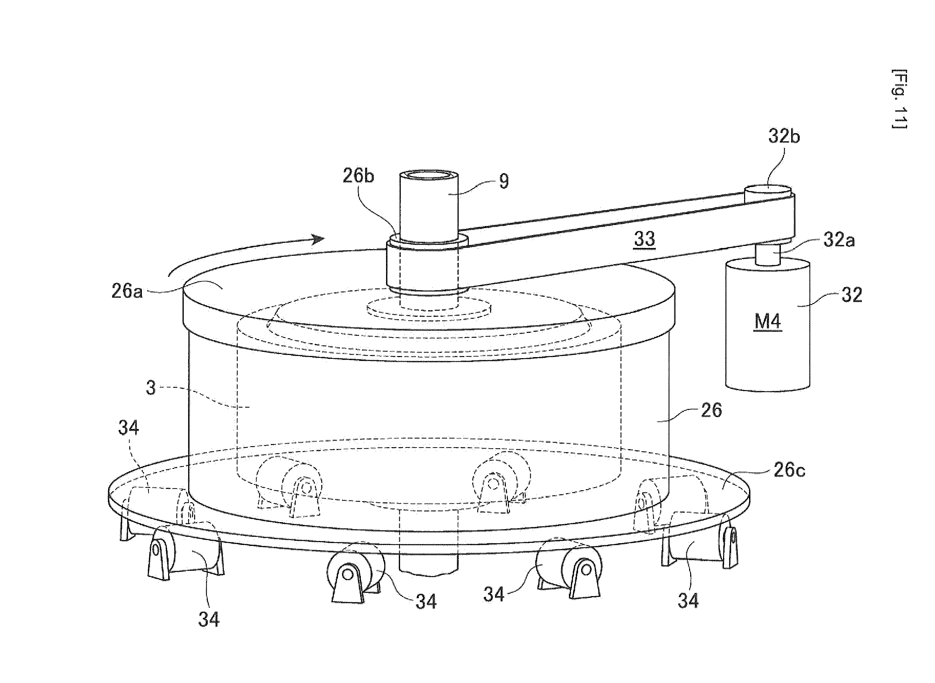

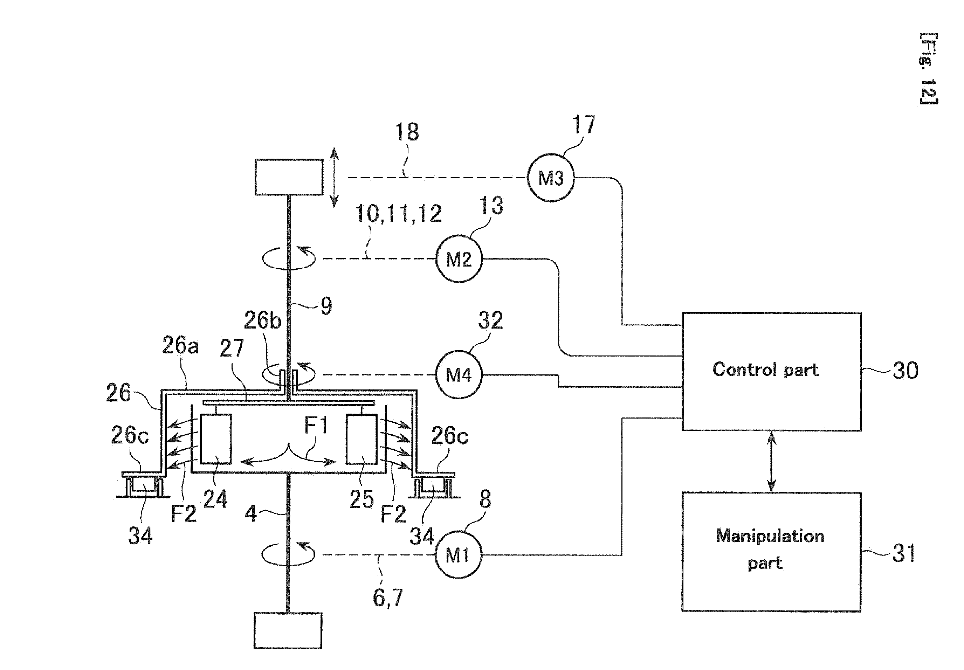

As shown in Figures 11 and 12, the cylindrical cover body 26 may be rotated independently of the rotary pressers 24 and 25 by another driving source, rather than being rotated integrally with the rotary pressers 24 and 25. Specifically, in such a case, the cylindrical cover body 26 has a top plate 26a, a boss part 26b that is integral with the top plate 26a, incorporates a bearing and protrudes upward from the center of the top plate 26a, and a flange 26c that protrudes radially outward from the outer periphery of a lower end part of the cover body 26, and the cylindrical cover body 26 is supported so as to be able to rotate about the upper shaft 9 independently of the upper shaft 9 by the upper shaft 9 serving also as an input tube being inserted into the boss part 26b and the flange 26c being supported by a plurality of rollers 34 arranged circumferentially. A timing belt 33 runs between a driving pulley 32b, which is attached to a drive shaft 32a of a servomotor (M4) 32, and a driven pulley, which is constituted by the boss part 26b. In this way, the cover body 26 can be rotated independently of the rotary pressers 24 and 25.

Next, the scraping member, which is an essential part of the present invention, will be described in detail. As shown in Figures 3 to 5, an inner surface scraping member 22 that scrapes any filtered object adhering to the inner surface of the cylindrical cover body 26 and an outer surface scraping member 23 that scrapes any filtered object adhering to the outer surface of the circumferential plate 3a of the bottomed cylindrical vessel 3 are disposed between the outer surface of the strainer vessel 3 and the cylindrical cover body 26. The scraping members 22 and 23 are supported on a rotary attachment part 32 via levers 22b and 23b, respectively. The scraping members 22 and 23 can be switched between a scraping-active state and a scraping-inactive state by appropriately rotating the lever 22b to bring a scraping blade 22a into contact with or separating from the inner surface of the cover body 26 and by appropriately rotating the lever 23b to bring a scraping blade 23a into contact with or separating from the outer surface of the circumferential plate 3a.

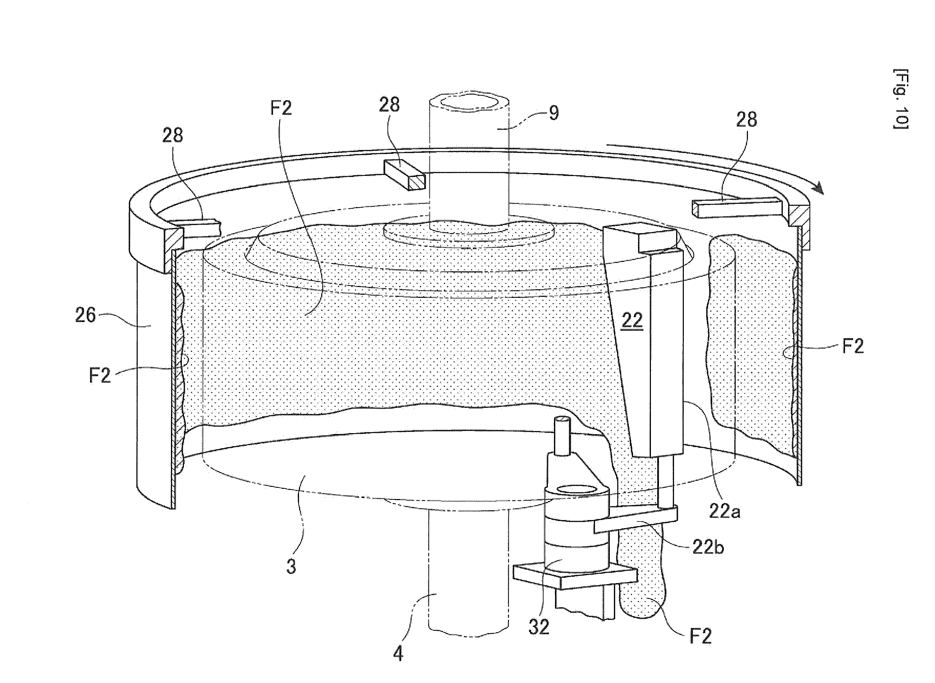

In particular, with the configuration in which the inner surface scraping member 22 can be switched between the active state and the inactive state, whether to use the scraping member 22 or not can be determined depending on the properties of the filtered object: for example, if the filtered object is highly fluid, the scraping member 22 is set in the inactive state to let the filtered object drop or flow by gravity, and if the filtered object is highly adhesive, as shown in Figures 9 and 10, the scraping member 22 is set in the active state to actively scrape the filtered object F2 adhering to the inner surface of the cover body 26.

As shown in Figures 1 to 3, a supply tray 19 that receives the object to be strained and guides the object into the input tube 9 is attached in a horizontal position to an upper end part of the upper shaft 9 serving also as the input tube. At a central part of the supply tray 19, a chute opening 19a is formed to guide the object to be strained into the input tube 9. Below the strainer vessel 3, a collection tray 20 that receives the fluid filtered object F2 collected by the cylindrical cover body 26 and dropping therefrom is disposed in a horizontal position. A chute opening 20a is formed in the collection tray 20 at a position toward a user, and the device is configured so that the filtered object scraped by the scraping members 22 and 23 described above drops into or around the chute opening 20a. Below the chute opening 20a, a drawer-type collection box 21 is disposed to collect the filtered object dropping through the chute opening 20a of the collection tray 20. All of the filtered object F2 resulting from the straining process is collected in the collection tray 20.

As shown in Figure 8, an electrical system of the strainer device includes a manipulation part 31 used for various instruction operations, a servomotor (M1) 8 that makes the lower shaft 4 rotate, a servomotor (M2) 13 that makes the upper shaft 9 rotate, a servomotor (M3) 17 that makes the elevator platform 14 ascend and descend, and a control part 30 that controls the three servomotors 8, 13 and 17 so as to achieve the operation specified through the manipulation part 31. As is known to those skilled in the art, the control part of the system of this type can be implemented by a combination of a programmable controller (referred to also as a sequencer) and a servomotor controller, and the manipulation part can be implemented by a programmable display (programmable terminal), which is an accessory to the programmable controller, for example.

Next, an operation of the strainer device 100 configured as described above will be described. In response to a predetermined operation on the manipulation part 31, the elevator unit 2 descends from a raised position (see Figure 1) to a lowered position (see Figure 2) by the action of the ball screw mechanism 18 and the servomotor 17. As described earlier, the rotary pressers 24 and 25 are put in the retracted position before the descending and put back in the protruding position after the descending (see Figures 4 and 5).

The superheated steam-softened object F1, which is the object to be strained, or specifically, a food ingredient such as a vegetable, a fruit or a grain softened by being exposed to a superheated steam atmosphere in a heating furnace (not shown), is moved from an appropriate container to the supply tray 19, manually gathered in appropriate amounts to the chute opening 19a with an appropriate tool (such as a spatula), and allowed to drop into the hollow upper shaft 9 serving also as an input tube and eventually into the strainer vessel 3. The object F1 to be strained put into the strainer vessel 3 from a lower end opening 9a (see Figure 7) of the shaft 9 radially moves or is radially scattered by the action of the centrifugal force generated by the rotation of the strainer vessel 3 and pressed against the inner surface of the circumferential plate 3a of the strainer vessel 3 under the pressure corresponding to the centrifugal force.

The object to be strained thus pressed against the inner surface of the circumferential plate 3a of the strainer vessel 3 is further rubbed or pressed against the inner surface of the circumferential plate 3a by the pressers 24 and 25 in a cycle determined by the difference in number of rotations between the vessel 3 and the rotary pressers 24 and 25.

Under the pressure of the centrifugal force and the pressing or rubbing force of the pressers 24 and 25, the filtered object F2 projects from or is pushed out of the filtering hole 3d of the circumferential plate 3a. Then, if the filtered object F2 is highly fluid, the object collides with the inner surface of the cover body 26 and drops by gravity along the inner surface. If the filtered object F2 is highly viscous, strings of the object of some length are formed on the exit side of the filtering holes 3d. If the filtered object F2 is highly adhesive, the object collides with the inner surface of the cylindrical cover body 26 and then adheres to the inner surface as shown in Figure 10.

The filtered object F2 that is highly fluid and drops by gravity along the inner surface of the cover body 26 drops onto the collection tray 20. Therefore, the filtered object F2 can be collected in the drawer-type collection box 21 by manually gathering the object to the chute opening 20a with an appropriate tool (such as a spatula) and letting the object drop into the chute opening 20a.

The strings of the filtered object formed on the exit side of the filtering holes 3d of the circumferential plate 3a are scraped off the outer surface of the circumferential plate 3a of the strainer vessel 3 by bringing the scraping blade 23a of the outer surface scraping member 23 into contact with the outer surface of the circumferential plate 3a at an appropriate time. The filtered object F2 scraped off gathers to the chute opening 20a of the collection tray 20 and thus can be collected in the drawer-type collection box 21 in the same way as described above.

The filtered object that collides with the inner surface of the cylindrical cover body 26 and adheres to the inner surface is scraped off the inner surface of the cover body 26 by bringing the scraping blade 22a of the inner surface scraping member 22 into contact with the inner surface of the cover body 26 constantly or at an appropriate time. The filtered object F2 scraped off gathers to the chute opening 20a of the collection tray 20 and thus can be collected in the drawer-type collection box 21 in the same way as described above.

Through a predetermined instruction operation on the manipulation part 31, the rotation of the strainer vessel 3 is set to be clockwise when viewed from above and at a predetermined rotational velocity (a number of rotations N1, for example), and the rotation of the rotary pressers 24 and 25 is set to be clockwise when viewed from above and at a predetermined rotational velocity (a number of rotations N2, for example). Note that N1 ≠ N2 and ΔN (= N1 - N2) is a relative rotational velocity of the rotary pressers 24 and 25 with respect to the circumferential plate 3d of the vessel 3. Then, the strainer vessel 3 and the pressers 24 and 25 automatically rotate at a preset rotational velocity under the control of the control part 30.

The number of rotations N1 of the strainer vessel 3 has a direct effect on the centrifugal force exerted on the object to be strained. Thus, the number of rotations N1 of the strainer vessel 3 has to be set by considering how easily the object to be strained passes through the filtering holes 3d of the circumferential plate 3a. In general, if the object to be strained is highly viscous or is high in fiber content, the object tends to resist passing through the filtering holes 3d, and the number of rotations N1 of the vessel 3 is set to be high to achieve a high centrifugal force. On the other hand, in general, if the object F1 to be strained is less viscous or is low in fiber content, the object tends to easily pass through the filtering holes 3d, and the number of rotations N1 of the vessel 3 can be set to be low.

As for the number of rotations N2 of the rotary pressers 24 and 25, ΔN (= N1 - N2) is the relative rotational velocity of the pressers 24 and 25 with respect to the circumferential plate 3a of the strainer vessel 3, and the relative rotational velocity is related to the cycle in which the pressers 24 and 25 press and rub against the object to be strained deposited on the circumferential plate 3a. At the part of the circumferential plate 3a rubbed against by the pressers 24 and 25, clogging of the filtering holes 3d tends to be eliminated. In other words, the cycle of rubbing against the circumferential plate 3a may be understood to be the duration for which the object F1 to be strained is continuously pressed by the centrifugal force against the circumferential plate 3a at a point of the circumferential plate 3a.

However, a shortening of the cycle of rubbing against the circumferential plate 3a does not necessarily lead to elimination of clogging of the filtering holes 3d and to an improvement of the efficiency of the straining process. If the cycle of running against the circumferential plate 3d is shortened, the relative velocity of the rotary pressers 24 and 25 with respect to the circumferential plate 3a increases, and a frictional heat may be generated and pose a problem of quality alteration or deterioration of the object to be strained.

Furthermore, if the object F1 to be strained is a plant food ingredient heated in a superheated steam atmosphere with substantially no oxygen, most cells of the food ingredient remain intact, and thus, the straining process has to be conducted to minimize damage to the cells. It is found that destruction of cells often occurs when the pressers 24 and 25 rub against the circumferential plate 3a. From the viewpoint of preventing destruction of cells, it is not preferable to frequently rub the pressers 24 and 25 against the circumferential plate 3a. In fact, it is found that, in the case of the object to be strained processed in superheated steam, if the cycle of rubbing the pressers 24 and 25 against the circumferential plate 3a is set to be long so that strings of the filtered object F2 are pushed out of the filtering holes 3d, cells of the resulting strained object F2 remain intact, and thus, a strained object (puree food product) of high quality that retains the color and flavor of the ingredient can be obtained.

With the strainer device including the strainer vessel 3 and the pressers 24 and 25 according to the present invention, any desired centrifugal force and any desired rubbing cycle can be achieved by adjusting the rotational frequencies (N1, N2) of the strainer vessel 3 and the pressers 24 and 25, and various objects F1 to be strained having different physical properties can be easily strained under an optimal condition.

In an operation test, the inventors have found that, on the assumption that the strainer vessel 3 and the pressers 24 and 25 rotate in the same direction, if the number of rotations of the strainer vessel 3 is set at 200 to 400 rotations per minute, and the number of rotations of the pressers 24 and 25 is set to be approximately 50 to 200 rotations per minute lower than the number of rotations of the strainer vessel 3 so that the vessel 3 passes the pressers 24 and 25, a puree food product of high quality can be efficiently obtained from the object F1 to be strained having supposed physical properties.

As a more specific example, the inventors have confirmed that, when the strainer device is used with a superheated steam-softened fruit (such as melon, strawberry, raspberry, blueberry) that is high in water content, soft and is low in viscosity, if the number of rotations of the strainer vessel 3 is set at 250 to 400 rotations per minute, which produce sufficient pressing force by centrifugal force, and the number of rotations of the pressers 24 and 25 is set at 50 to 150 rotations per minute, clogging does not occur in the strainer vessel 3, and a puree food product can be efficiently manufactured.

Furthermore, the inventors have confirmed that, when the strainer device is used with a superheated steam-softened food (such as sweet potato or potato) that is low in water content, relatively hard and is low in viscosity, if the number of rotations of the strainer vessel 3 is set at 200 to 300 rotations per minute, which produce sufficient pressing force by centrifugal force, and the number of rotations of the pressers 24 and 25 is set at 50 to 150 rotations per minute, clogging does not occur in the strainer vessel 3, and a puree food product can be efficiently manufactured.

Next, a method of manufacturing a puree food product involving a degassing process, which is an essential part of the present invention, will be described. If a puree food product is manufactured from a food ingredient (such as strawberry) that is high in water content softened by heating in superheated steam in a normal operation mode of the strainer device described above, the manufactured processed food product does not vividly show the color of the food ingredient itself but has a bad whitish appearance because of fine air bubbles contained therein and therefore has a reduced commercial value. The inventors have found that this problem can be solved by increasing the time for which the filtered object F2 having passed through the filtering holes 3d of the strainer vessel 3 and reached the inner surface of the cover body 26 stays on the surface of the cover body 26, that is, the time for which the filtered object F2 is pressed against the inner surface of the cover body 26 and degassed by the action of the centrifugal force generated by the rotation of the cover body 26.

As can be seen, the time for which the filtered object F2 having reached the inner surface of the cover body 26 can be increased by increasing the centrifugal force exerted on the filtered object F2 on the surface of the cover body 26 to reduce the flow-down velocity of the filtered object F2 flowing downward along the inner surface of the cover body 26. In the example shown in Figure 8 (in which the pressers 24 and 25 rotate integrally with the cover body 26), a possible method of achieving this is to increase the rotational velocity of the cover body 26 by increasing the number of rotations of the motor (M2) 13 to bring the rotational velocity of the pressers closer to the rotational velocity of the strainer vessel 3. In the example shown in Figure 12 (in which the presser 24 and 25 rotate independently of the cover body 26), a possible method is to increase the number of rotations of the motor (M4) to independently increase the rotational velocity of the cover body 26. A further method is to modify the shape of the inner surface of the cover body 26 into a reversed circular truncated cone or the like with the diameter increasing from below to above so that the centrifugal force exerted to the inner surface constantly has a vertical component. In any case, it is preferred to set the scraping member 22 for the inner surface in the inactive state or to bring the scraping blade of the scraping member 22 into contact with only a limited area of the inner surface of the cover body 26 that is close to the lower end of the cover body 26 so that only the filtered object having flowed downward to close to the bottom of the cover body 26 is scrapped off into the collection tray 20.

In short, the method of manufacturing a puree food product that promotes degassing can be considered to include three steps. A first step is to put the softened food ingredient F1 that is high in water content and is softened by heating in the superheated steam atmosphere into the vertical bottomed cylindrical strainer vessel 3 that is supported so as to be rotatable about the central axis and has the circumferential plate 3a with the filtering holes 3d, and obtain the filtered object by passing the softened food ingredient F1 through the filtering holes 3d by the action of at least the centrifugal force generated by rotation of the strainer vessel 3. A second step is to make the cover body 26, which is in a vertical orientation, has an inner surface that is circular in cross section, surrounds the strainer vessel 3 at an appropriate distance and is supported so as to be rotatable about the central axis thereof, rotate at a number of rotations that is high enough to press the filtered object F2 pushed out of the filtering holes 3d of the circumferential plate 3a of the strainer vessel 3 against the inner surface of the cover body 26 by the action of the centrifugal force, thereby allowing the filtered object F2 to adhere to the inner surface of the cover body 26, to flow downward along the inner surface over a time and to be degassed during the time to remove a fine air bubble in the filtered object F2 by the action of the pressure on the filtered object F2 against the inner surface. A third step is to scrape the degassed filtered object F2 adhering to the inner surface of the cover body 26 to a site with the scraping member 22 in a final phase of the flow down. In this case, of course, the position of the scraping blade 22a of the scraping member 22 needs to be adjusted so that the scraping blade 22a comes into contact with only a part of the cover body 26 close to the lower end thereof and scrapes the filtered object off the part.

In such a method, if the flow-down velocity of the filtered object F2 flowing down along the inner surface of the cover body 26 is reduced, the time for which the filtered object F2 is pressed against the inner surface of the cover body 26 and degassed by the action of the centrifugal force generated by rotation of the cover body 26 increases, and the fine air bubbles in the filtered object F2 are gradually removed while the filtered object F2 moves to the collection tray 20. Thus, the resulting puree food product does not have a whitish appearance but vividly shows the color of the food ingredient itself and has an increased commercial value.

Although the present invention is applied to the strainer device that has the rotary pressers 24 and 25 in the strainer vessel 3 in the embodiments described above, the application of the present invention is not limited to these embodiments. As shown in Patent Literature 1 described above, of course, the present invention can also be applied to a strainer device that has a fixed presser in a strainer vessel or a strainer device that has no presser and strains food ingredients only by rotation of a strainer vessel.

### Industrial Applicability

The present invention can be used for a process of producing a liquid or puree food product retaining the functionality of a food ingredient or having an additional functionality by straining the food ingredient (such as a fruit, a vegetable or a grain) softened by heating in superheated steam without or with low concentration of oxygen by passing the food ingredient through a strainer.

### Reference Signs List

1 strainer processing part
2 elevator unit
3 strainer vessel
3a circumferential plate
3b inward flange
3c bracket
3d hole
4 lower shaft
5 thrust bearing
6 driven pulley
7 timing belt
8 servomotor (M1)
9 upper shaft (input tube)
9a input opening
10 driven pulley
11 timing belt
12 driving pulley
13 servomotor (M2)
14 elevator platform
15 guide rod
16 guide sleeve
17 servomotor (M3)
18 ball screw mechanism
19 supply tray
19a chute opening
20 collection tray
20a chute opening
21 collection box
22 inner surface scraping member
22a scraping blade
23 outer surface scraping member
23a scraping blade
24 rotary presser
24a curved guide surface having an arc-shaped cross section
24b guide groove
25 rotary presser
25a curved guide surface having an arc-shaped cross section
25b guide groove
25c flat surface
25d straight edge
26 cover body
26a top plate
26b boss part
26c flange part
27 lid plate
28 coupling bar
29 arc-shaped guide slot
29a pin
30 control part
31 manipulation part
32 servomotor (M4)
32a drive shaft
32b driving pulley
33 timing belt
34 roller
100 strainer device
A arrow indicating ascending and descending directions
B arrow indicating directions in which filtered object is scattered
C arrow indicating direction of rotation of cover body
D arrow indicating direction of rotation of strainer vessel
F1 object to be strained (softened food ingredient)
F2 filtered object (puree food product)

## Claims

1. A strainer device that has at least a vertical bottomed cylindrical strainer vessel, which is supported so as to be rotatable about a central axis thereof and has a circumferential plate with a filtering hole, and crushes a food ingredient softened by heating put into the strainer vessel by passing the food ingredient through the filtering hole by the action of a centrifugal force generated by rotation of the strainer vessel, the strainer device comprising:
a cover body that is in a vertical orientation, has an inner surface that is circular in cross section, surrounds the strainer vessel at an appropriate distance and is supported so as to be rotatable about a central axis thereof;
a scraping member that is disposed at a predetermined position along the inner surface of the cover body and scrapes a filtered object adhering to the inner surface when the cover body is rotating; and
a rotationally driving mechanism that makes the strainer vessel and the cover body rotate,
wherein, when the bottomed cylindrical vessel is rotating, the filtered object pushed out of the filtering hole and adhering to the inner surface of the cylindrical cover body is scraped off to the predetermined position on a circumference along the inner surface.

2. The strainer device according to claim 1, wherein the scraping member is capable of being switched between a scraping-active state and a scraping-inactive state.

3. The strainer device according to claim 1, wherein an inlet of a collection vessel for the filtered object or a receiving port opening into a collection vessel for the filtered object is provided at the predetermined position along the inner surface to which the filtered object is scraped off.

4. A method of manufacturing a puree food product to manufacture puree food product by performing a straining process on a food ingredient including a vegetable, a fruit and/or a grain softened by heating in a superheated steam atmosphere in a strainer device according to any one of claims 1 to 3, the strainer device having at least a vertical bottomed cylindrical strainer vessel, which has a circumferential plate with a filtering hole, crushing the food ingredient softened by heating put into the strainer vessel by passing the food ingredient through the filtering hole by the action of a centrifugal force generated by rotation of the strainer vessel.

5. A method of manufacturing a puree food product, comprising:
a step of putting a softened food ingredient that is high in water content and is softened by heating in a superheated steam atmosphere into a vertical bottomed cylindrical strainer vessel that is supported so as to be rotatable about a central axis and has a circumferential plate with a filtering hole, and obtaining a filtered object by passing the softened food ingredient through the filtering hole by the action of at least a centrifugal force generated by rotation of the strainer vessel;
a step of making a cover body, which is in a vertical orientation, has an inner surface that is circular in cross section, surrounds the strainer vessel at an appropriate distance and is supported so as to be rotatable about a central axis thereof, rotate at a number of rotations that is high enough to press the filtered object pushed out of the filtering hole of the circumferential plate of the strainer vessel against an inner surface of the cover body by the action of a centrifugal force, thereby allowing the filtered object to adhere to the inner surface of the cover body, to flow downward along the inner surface over a time and to be degassed during the time to remove a fine air bubble in the filtered object by the action of the pressure on the filtered object against the inner surface; and
a step of scraping the degassed filtered object adhering to the inner surface of the cover body to a site with a scraping member in a final phase of the flow down.
